# EUROPEAN PATENT APPLICATION

(11) **EP 4 044 556 A1**
(43) Date of publication of application: **17.08.2022**
(21) Application number: 20885804.3
(22) Date of filing: 01.08.2020
(51) Int. Cl.: H04L 29/08, H04L 12/26

(54) **ACCESS DEVICE TYPE DETERMINATION METHOD, DEVICE AND SYSTEM**

(30) Priority: 05.11.2019 CN 201911071868
(71) Applicant: Huawei Technologies Co., Ltd., Longgang District Shenzhen, Guangdong 518129 (CN)
(72) Inventor: XUE, Li, Shenzhen, Guangdong 518129 (CN); ZHANG, Liang, Shenzhen, Guangdong 518129 (CN); XIE, Yuming, Shenzhen, Guangdong 518129 (CN); CHENG, Jian, Shenzhen, Guangdong 518129 (CN)
(74) Representative: Isarpatent
(86) International application number: PCT/CN2020/106483
(87) International publication number: WO 2021/088438

(57) **Abstract**

This application provides a method for determining an access device type, a device, and a system. An access device type is determined by obtaining one or more packet pairs and a time difference of each packet pair. Each packet pair includes a first packet and a second packet, where the second packet is a response to the first packet, and the one or more packet pairs pass through a same access device. Based on this solution, maintenance manpower required for determining an access device type can be reduced, and O&M personnel management complexity of operators or service providers can be reduced.

## Description

This application claims priority to Chinese Patent Application No. 201911071868.X, filed with the China National Intellectual Property Administration on November 5, 2019 and entitled "METHOD FOR DETERMINING ACCESS DEVICE TYPE, DEVICE, AND SYSTEM", which is incorporated herein by reference in its entirety.

### TECHNICAL FIELD

This application relates to the communication field, and to a method for determining an access device type, a device, and a system.

### BACKGROUND

Home broadband services are a major type of service provided by operators for home users. Based on the service, the operators provide access devices for families to access the Internet. When locating faults on a home network or performing a targeted marketing promotion for the home network, an operator first needs to determine whether a third-party access device exists in the home network. Generally, when the third-party access device exists in the home network, a type of the access device may be determined by using a Media Access Control (Media Access Control, MAC) address of the device. When a device manufacturer that provides the access device also produces terminal devices, such as mobile phones or tablet computers, the device type of the access device cannot be determined by using the MAC address. The manner of determining the type of the access device by using the MAC address requires O&M personnel of the operator to periodically trace and maintain the MAC address, which is complex. In addition, a MAC address of a related device may not be obtained due to user privacy and security concerns. This is complex in management and labor-intensive.

### SUMMARY

This application provides a method for determining an access device type, a device, and a system, to reduce maintenance manpower required for determining an access device type and reduce management complexity.

According to a first aspect, a method for determining an access device type is provided, and includes: obtaining one or more packet pairs, where each packet pair includes a first packet and a second packet, the second packet is a response to the first packet, and the one or more packet pairs pass through a same access device; and determining a type of the access device based on a time difference or time differences of the one or more packet pairs, where a time difference of any packet pair is a difference between receive time points of two packets in the packet pair.

Based on the foregoing method, the device type of the access device may be determined simply through the solution of using the time difference of the packet pair, and therefore management complexity and O&M personnel management complexity are reduced.

In a possible manner, the first packet is a synchronize sequence number acknowledgement packet of a Transmission Control Protocol (TCP) connection, and the second packet is an acknowledgement packet of the TCP connection.

Based on the foregoing method, information about a time difference from the access device to a network device can be obtained by obtaining a synchronize sequence number acknowledgement packet and an acknowledgment packet of a same TCP connection, to provide a calculation basis for determining the type of the access device based on the information about the time difference.

In a possible manner, the determining a type of the access device based on a time difference or time differences of the one or more packet pairs includes: determining the type of the access device based on a time difference threshold and the time difference or the time differences of the one or more packet pairs.

In a possible manner, the determining the type of the access device based on a time difference threshold and the time difference or the time differences of the one or more packet pairs includes: comparing a mean value or a median of the time differences of the plurality of packet pairs with the time difference threshold, to determine the type of the access device.

In a possible manner, the determining the type of the access device based on a time difference threshold and the time difference or the time differences of the one or more packet pairs includes: determining the type of the access device based on a proportion of a quantity of packet pairs that are greater than or less than the time difference threshold in the time differences of the plurality of packet pairs.

The type of the access device can be quickly and accurately determined by using the plurality of solutions of comparing the time differences of the packet pairs with the time difference threshold provided in the foregoing manners, which requires simple management.

In a possible manner, the obtaining one or more packet pairs includes: obtaining the first packet received by a physical interface that is of a packet capture device and that is far from the access device; and obtaining the second packet received by a physical interface that is of the packet capture device and that is close to the access device.

The first packet is obtained from the interface that is far from the access device and the second packet is obtained from the interface that is close to the access device, that is, the first packet and the second packet are obtained based on a sending direction of a data flow. In this way, accurate time difference information can be obtained, and accuracy of determining the type of the access device can be improved.

According to a second aspect, a network system is provided, and includes: a packet obtaining device, for obtaining one or more packet pairs, where each packet pair includes a first packet and a second packet, the second packet is a response to the first packet, and the one or more packet pairs pass through a same access device; and a type determining device, for determining a type of the access device based on a time difference or time differences of the one or more packet pairs, where a time difference of any packet pair is a difference between receive time points of two packets in the packet pair.

Based on the foregoing system, the device type of the access device may be determined simply through the solution of using the time difference of the packet pair, and therefore management complexity and O&M personnel management complexity are reduced.

In a possible manner, the first packet is a synchronize sequence number acknowledgement packet of a Transmission Control Protocol (TCP) connection, and the second packet is an acknowledgement packet of the TCP connection.

Based on the foregoing manner, information about a time difference from the access device to a network device can be obtained by obtaining a synchronize sequence number acknowledgement packet and an acknowledgment packet of a same TCP connection, to provide a calculation basis for determining the type of the access device based on the information about the time difference.

In a possible manner, that the type determining device determines the type of the access device based on the time difference or the time differences of the one or more packet pairs includes: The type determining device determines the type of the access device based on a time difference threshold and the time difference or the time differences of the one or more packet pairs.

In a possible manner, that the type determining device determines the type of the access device based on the time difference or the time differences of the one or more packet pairs includes: The type determining device compares a mean value or a median of the time differences of the plurality of packet pairs with the time difference threshold, to determine the type of the access device.

In a possible manner, that the type determining device determines the type of the access device based on the time difference or the time differences of the one or more packet pairs includes: The type determining device determines the type of the access device based on a proportion of a quantity of packet pairs that are greater than or less than the time difference threshold in the time differences of the plurality of packet pairs.

The type of the access device can be quickly and accurately determined by using the plurality of solutions of comparing the time differences of the packet pairs with the time difference threshold provided in the foregoing manners, which requires simple management.

In a possible manner, the network system includes a packet capture device, and obtaining the one or more packet pairs includes: obtaining the first packet received by a physical interface that is of the packet capture device and that is far from the access device; and obtaining the second packet received by a physical interface that is of the packet capture device and that is close to the access device.

The first packet is obtained from the interface that is far from the access device and the second packet is obtained from the interface that is close to the access device, that is, the first packet and the second packet are obtained based on a sending direction of a data flow. In this way, accurate time difference information can be obtained, and accuracy of determining the type of the access device can be improved.

According to a third aspect, a network device is provided, and includes: a processor and at least two communication interfaces.

The processor is configured to enable the network device to: capture a first packet received by a first communication interface in the at least two communication interfaces, capture a second packet received by a second communication interface in the at least two communication interfaces, and obtain receive time points of receiving the first packet and the second packet, where the second packet is a response to the first packet, and the first packet and the second packet pass through a same access device.

The network device may obtain the first packet and the second packet, so that it is possible to determine a device type of the access device simply based on a time difference of a packet pair, and therefore management complexity and O&M personnel management complexity are reduced.

In a possible manner, the first packet is a synchronize sequence number acknowledgement packet of a transmission control protocol (TCP) connection, and the second packet is an acknowledgement packet of the TCP connection.

Based on the foregoing manner, information about a time difference from the access device to the network device can be obtained by obtaining a synchronize sequence number acknowledgement packet and an acknowledgment packet of a same TCP connection, to provide a calculation basis for determining the type of the access device based on the information about the time difference.

In a possible manner, the first communication interface is a communication interface that is of the network device and that is far from the access device, and the second communication interface is a communication interface that is of the network device and that is close to the access device.

The first packet is obtained from the interface that is far from the access device and the second packet is obtained from the interface that is close to the access device, that is, the first packet and the second packet are obtained based on a sending direction of a data flow. In this way, accurate time difference information can be obtained, and accuracy of determining the type of the access device can be improved.

In a possible manner, the network device further includes a memory, where the processor is configured to enable the network device to: capture the first packet received by the first communication interface in the at least two communication interfaces, capture the second packet received by the second communication interface in the at least two communication interfaces, and obtain the receive time points of receiving the first packet and the second packet. Details are as follows:

The memory stores instructions, where the processor executes the instructions to enable the network device to: capture the first packet received by the first communication interface in the at least two communication interfaces, capture the second packet received by the second communication interface in the at least two communication interfaces, and obtain the receive time points of receiving the first packet and the second packet.

In a possible manner, the processor is further configured to: determine that the first packet and the second packet are a packet pair, and determine a time difference of the packet pair, where the time difference of the packet pair is a difference between the receive time point of a first packet pair and the receive time point of the second packet.

In a possible manner, the processor is further configured to determine a type of the access device based on the time difference of the packet pair.

In a possible manner, the processor is further configured to: obtain a first packet characteristic based on the first packet, and obtain a second packet characteristic based on the second packet. The first communication interface is further configured to forward the first packet or the first packet characteristic, and the second communication interface is further configured to forward the second packet or the second packet characteristic.

The network device sends the first packet and the second packet, so that another network device may determine the device type of the access device simply based on the time difference of the packet pair, and therefore management complexity and O&M personnel management complexity are reduced.

According to a fourth aspect, a network device is provided, and includes: a processor, a memory, and a communication interface. The communication interface is configured to receive a plurality of packets, where the plurality of packets pass through a same access device. The memory stores instructions, and the processor is configured to execute the instructions to determine one or more packet pairs based on the plurality of packets, where any packet pair in the one or more packet pairs includes a first packet and a second packet, and the second packet in the packet pair is a response to the first packet in the packet pair. The processor is further configured to obtain a time difference or time differences of the one or more packet pairs, where the time difference or the time differences of the one or more packet pairs is a difference between receive time points of two packets in any packet pair.

In a possible manner, that the processor is configured to determine the one or more packet pairs based on the plurality of packets is specifically: When the first packet carries a first packet characteristic, and the second packet carries a second packet characteristic, the processor determines, based on the first packet characteristic and the second packet characteristic, that the first packet and the second packet are a packet pair.

In a possible manner, the first packet is a synchronize sequence number acknowledgement packet of a transmission control protocol (TCP) connection, and the second packet is an acknowledgement packet of the TCP connection.

In a possible manner, the processor is further configured to determine a type of the access device based on the time difference or the time differences of the one or more packet pairs.

In a possible manner, that the processor is configured to determine a type of the access device based on the time difference or the time differences of the one or more packet pairs is specifically: The processor is configured to determine the type of the access device based on a time difference threshold and the time difference or the time differences of the one or more packet pairs.

In a possible manner, that the processor is configured to determine the type of the access device based on a time difference threshold and the time difference or the time differences of the one or more packet pairs is specifically: comparing a mean value or a median of the time differences of the plurality of packet pairs with the time difference threshold, to determine the type of the access device.

In a possible manner, that the processor is configured to determine the type of the access device based on a time difference threshold and the time difference or the time differences of the one or more packet pairs is specifically: determining the type of the access device based on a proportion of a quantity of packet pairs that are greater than or less than the time difference threshold in the time differences of the plurality of packet pairs.

According to a fifth aspect, a network device is provided, and includes: a processor and a memory. The memory stores instructions, and the processor is configured to execute the instructions in the memory to determine a type of an access device based on a time difference or time differences of one or more packet pairs. The packet pair includes a first packet and a second packet, where the second packet is a response to the first packet, and the one or more packet pairs pass through a same access device.

In a possible manner, the first packet is a synchronize sequence number acknowledgement packet of a transmission control protocol (TCP) connection, and the second packet is an acknowledgement packet of the TCP connection.

In a possible manner, that the processor is configured to determine the type of the access device based on the time difference or the time differences of the one or more packet pairs is specifically: The processor is configured to determine the type of the access device based on a time difference threshold and the time difference or the time differences of the one or more packet pairs.

In a possible manner, that the processor is configured to determine the type of the access device based on a time difference threshold and the time difference or the time differences of the one or more packet pairs is specifically: comparing a mean value or a median of the time differences of the plurality of packet pairs with the time difference threshold, to determine the type of the access device.

In a possible manner, that the processor is configured to determine the type of the access device based on a time difference threshold and the time difference or the time differences of the one or more packet pairs is specifically: determining the type of the access device based on a proportion of a quantity of packet pairs that are greater than or less than the time difference threshold in the time differences of the plurality of packet pairs.

According to a sixth aspect, a network device is provided, and includes an obtaining unit and a transceiver unit. The obtaining unit is configured to: receive a first packet and a second packet from at least two communication interfaces, and obtain receive time points of receiving the first packet and the second packet. The second packet is a response to the first packet, and the first packet and the second packet pass through a same access device.

The network device may obtain the first packet and the second packet, so that it is possible to determine a device type of the access device simply based on a time difference of a packet pair, and therefore management complexity and O&M personnel management complexity are reduced.

In a possible manner, the first packet is a synchronize sequence number acknowledgement packet of a transmission control protocol (TCP) connection, and the second packet is an acknowledgement packet of the TCP connection.

Based on the foregoing manner, time difference information that is from the access device to the network device can be obtained by obtaining a TCP synchronize sequence number acknowledgement packet and a TCP acknowledgment packet, to provide a calculation basis for determining the type of the access device based on the time difference information.

In a possible manner, a receiving interface of the first packet is a communication interface that is of the network device and that is far from the access device, and a receiving interface of the second packet is a communication interface that is of the network device and that is close to the access device.

The first packet is obtained from the interface that is far from the access device and the second packet is obtained from the interface that is close to the access device, that is, the first packet and the second packet are obtained based on a sending direction of a data flow. In this way, accurate time difference information can be obtained, and accuracy of determining the type of the access device can be improved.

In a possible manner, the transceiver unit is further configured to send the first packet and the second packet.

The network device sends the first packet and the second packet, so that another network device may determine the device type of the access device simply based on the time difference of the packet pair, and therefore management complexity and O&M personnel management complexity are reduced.

According to a seventh aspect, a network device is provided, and includes an obtaining unit and a transceiver unit. The obtaining unit is configured to receive one or more packet pairs. Each packet pair includes a first packet and a second packet, where the second packet is a response to the first packet, and the one or more packet pairs pass through a same access device. The obtaining unit is further configured to obtain receive time points of the first packet and the second packet. The obtaining unit is further configured to obtain a time difference or time differences of the one or more packet pairs.

In a possible manner, the obtaining unit is configured to obtain a time difference or time differences of the one or more packet pairs is specifically: When the first packet carries a first packet characteristic, and the second packet carries a second packet characteristic, the obtaining unit is configured to determine, based on the first packet characteristic and the second packet characteristic, that the first packet and the second packet are a packet pair. The obtaining unit is configured to obtain a time difference of the first packet and the second packet.

In a possible manner, the first packet is a synchronize sequence number acknowledgement packet of a transmission control protocol (TCP), and the second packet is an acknowledgement packet of the TCP connection.

According to an eighth aspect, a network device is provided, and includes an obtaining unit and a determining unit. The obtaining unit is configured to obtain one or more packet pairs and a time difference or time differences of the one or more packet pairs, where the packet pair includes a first packet and a second packet, the second packet is a response to the first packet, and the one or more packet pairs pass through a same access device. The determining unit is configured to determine a type of the access device based on the time difference or the time differences of the one or more packet pairs.

In a possible manner, the first packet is a synchronize sequence number acknowledgement packet of a transmission control protocol (TCP) connection, and the second packet is an acknowledgement packet of the TCP connection.

In a possible manner, that the determining unit is configured to determine a type of the access device based on the time difference or the time differences of the one or more packet pairs is specifically: The determining unit is configured to determine the type of the access device based on a time difference threshold and the time difference or the time differences of the one or more packet pairs.

In a possible manner, that the determining unit is configured to determine the type of the access device based on a time difference threshold and the time difference or the time differences of the one or more packet pairs is specifically: The determining unit is configured to determine the type of the access device based on the time difference threshold and the time difference or the time differences of the one or more packet pairs.

In a possible manner, that the determining unit is configured to determine the type of the access device based on a time difference threshold and the time difference or the time differences of the one or more packet pairs is specifically: The determining unit is configured to compare a mean value or a median of the time differences of the plurality of packet pairs with the time difference threshold, to determine the type of the access device.

In a possible manner, that the determining unit is configured to compare a mean value or a median of the time differences of the plurality of packet pairs with the time difference threshold, to determine the type of the access device is specifically: The determining unit is configured to determine the type of the access device based on a proportion of a quantity of packet pairs that are greater than or less than the time difference threshold in the time differences of the plurality of packet pairs.

### BRIEF DESCRIPTION OF DRAWINGS

To describe technical solutions of the present invention more clearly, the following briefly describes the accompanying drawings used in the embodiments. Apparently, the following accompanying drawings are merely accompanying drawings of some embodiments of the present invention, and a person of ordinary skill in the art may derive other technical solutions and accompanying drawings of the present invention from these accompanying drawings without creative efforts. These technical solutions and accompanying drawings shall also be considered as falling within the scope of the present invention.
FIG. 1 is a schematic diagram of an application scenario according to an embodiment of this application;
FIG. 2 is a schematic diagram of a system for determining an access device type according to an embodiment of this application;
FIG. 3 is a flowchart of a method for determining an access device type according to an embodiment of this application;
FIG. 4 shows an example of obtaining a packet pair in a method for determining an access device type according to an embodiment of this application;
FIG. 5 is a schematic diagram of packet pair information according to an embodiment of this application;
FIG. 6 is a schematic diagram of information about a time difference of a packet pair according to an embodiment of this application;
FIG. 7 is a schematic diagram of a structure of a network device according to an embodiment of this application;
FIG. 8 is a schematic diagram of a structure of a network device according to an embodiment of this application;
FIG. 9 is a schematic diagram of a structure of a network device according to an embodiment of this application;
FIG. 10 is a schematic diagram of a structure of a network device according to an embodiment of this application; and
FIG. 11 is a schematic diagram of a structure of a network device according to an embodiment of this application.

### DESCRIPTION OF EMBODIMENTS

In order to enable a person skilled in the art to better understand solutions of the present invention, the following further describes embodiments of the present invention in detail with reference to the accompanying drawings and implementations.

In this application, terms such as "first" and "second" are used to distinguish between same items or similar items that have basically same purposes or functions. It should be understood that there is no logical or time-sequential dependency between "first" and "second", and a quantity and an execution sequence are not limited.

The following describes an application scenario of this application as an example.

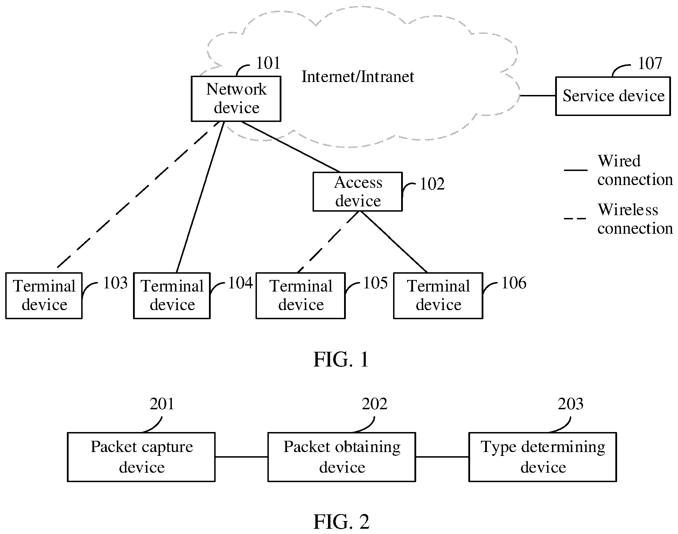

FIG. 1 shows a scenario diagram of a network communication system. The scenario includes a network device 101, an access device 102, a terminal device 103, a terminal device 104, a terminal device 105, a terminal device 106, a network device 107, and a service device 108. The terminal device 105 and the terminal device 106 access an internet (Internet) or an intranet (intranet) via the access device 102 and the network device 101. The terminal device 105 is connected to the access device 102 in a wireless manner, for example, through a wireless local area network (wireless local area network, WLAN). The terminal device 106 is connected to the access device 102 in a wired manner. The terminal device 103 and the terminal device 104 directly access the internet or the intranet via the network device 101. In an example, the terminal device requests an application service from the service device 108 via the internet or the intranet.

In this scenario, the network device 101 may be an optical network terminal (optical network termination, ONT), or may be a network device such as a switch or a router. The access device 102 may be a wireless network access point (access point, AP), or a device such as a switch or a router. The terminal device may be a device such as a mobile phone, a notebook computer, a personal computer, or a tablet computer.

In the scenario shown in FIG. 1, when a provider of the network device 101 is different from a provider of the access device 102, for example, when the network device 101 is provided by an operator or a service provider, and the access device 102 is purchased and used by a home user or an enterprise user, the operator or the service provider that provides the network device 101 cannot manage the access device 102. When an error occurs on a network, or the operator or the service provider expects to improve network quality, the operator or the service provider cannot determine whether an access device exists in the network provided by the operator or the service provider. In this case, O&M personnel are arranged to deliver a door-to-door service or contact the home user or the enterprise user by phone, to determine a situation, and then perform further fault diagnosis or analysis to improve the network quality. The process is complex and consumes a large quantity of manpower.

FIG. 2 is a schematic diagram of a system for determining an access device type according to an embodiment of this application. The system includes a packet capture device 201, a packet obtaining device 202, and a type determining device 203. The packet capture device 201 is connected to the packet obtaining device 202, the packet obtaining device 202 is connected to the packet capture device 201 and the type determining device 203, and the type determining device 203 is connected to the packet obtaining device 202. The system is applied to the application scenario shown in FIG. 1, and the network device 101 may be used as the packet capture device. The packet obtaining device and the type determining device may be implemented by a same device, or each may be implemented by an independent device (for example, a server or another network device) having a corresponding function. Alternatively, the packet capture device 201, the packet obtaining device 202, and the type determining device 203 may all be implemented by the network device 101.

It should be understood that, this is merely an example. A person skilled in the art may also refer to this embodiment to perform a similar replacement and application. Examples are not provided one by one in this application.

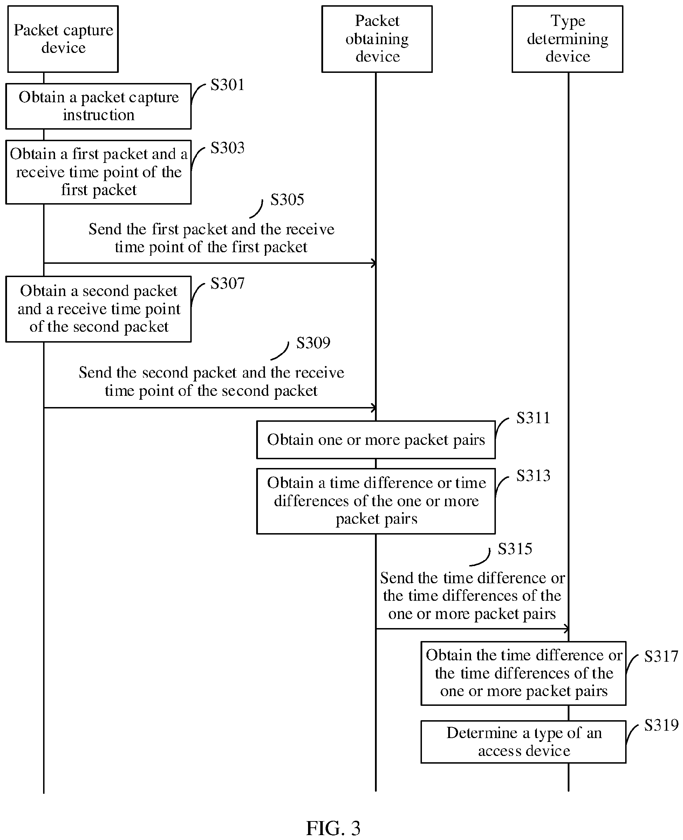

The following describes a method for determining an access device type according to an embodiment of this application with reference to FIG. 3. FIG. 3 is a flowchart of the method for determining an access device type.

The method may include the following steps.

S301. A packet capture device obtains a packet capture instruction, where the instruction indicates the packet capture device to obtain a packet that meets a condition and a receive time point of the packet. The packet capture instruction may be delivered by a network management system or manually configured by O&M personnel.

In an example, the packet capture instruction obtained by the packet capture device may be obtaining a Transmission Control Protocol (Transmission Control Protocol, TCP) synchronize sequence number acknowledgement (synchronize sequence number acknowledgement, SYNACK) packet and an acknowledgement (acknowledgement, ACK) packet.

Optionally, the packet capture device may also be a device that is pre-defined or pre-configured before delivery and that can automatically capture a packet instead of having to obtain the packet capture instruction.

S303. The packet capture device obtains a first packet and a receive time point of the first packet.

The packet capture device matches the obtained instruction to obtain the first packet. When the packet capture instruction obtained by the packet capture device is obtaining a TCP SYNACK packet, the packet capture device captures a TCP SYNACK packet, and records a time point of receiving the TCP SYNACK packet. S305. The packet capture device sends the first packet and the receive time point of the first packet to a packet obtaining device.

In an example, the packet capture device sends the first packet and the receive time point of the first packet that are obtained by the packet capture device to the packet obtaining device within a specified time period.

S307. The packet capture device obtains a second packet and a receive time point of the second packet.

The first packet and the second packet pass through a same access device, that is, the first packet and the second packet may be sent by the same access device, or may be sent by different devices, but there is a same access device for forwarding or sending the first packet and the second packet on forwarding paths of the first packet and the second packet.

In another example, the first packet is a SYNACK packet sent by a service device in response to a TCP handshake synchronization packet sent by a terminal device, and the second packet is a TCP ACK packet sent by the terminal device in response to a TCP SYNACK packet sent by the service device.

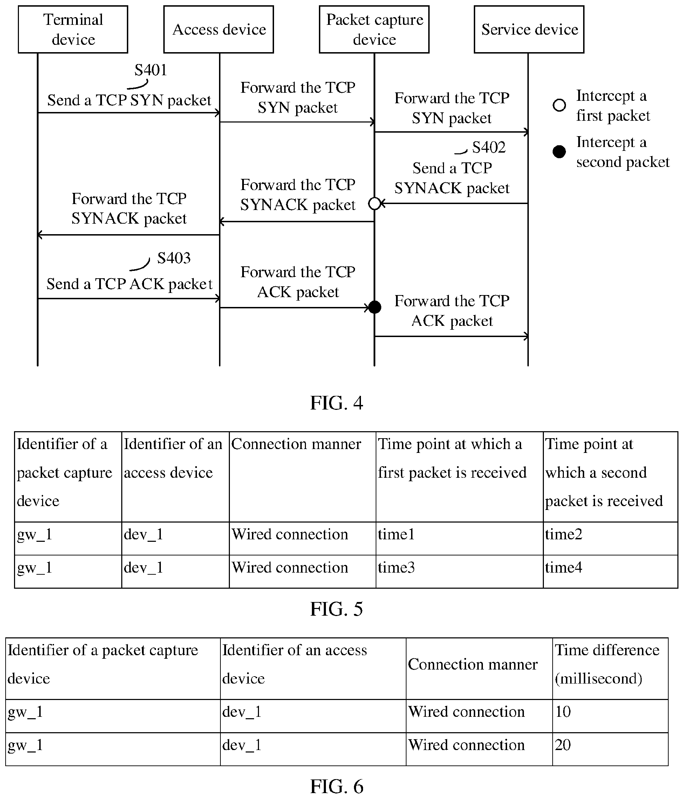

FIG. 4 shows an example of the first packet and the second packet captured by the packet capture device. In this example, when the terminal device needs to request a service from the service device, the terminal device initiates a TCP connection. In a process of connection, three handshakes are performed. That is, as shown in step S401, the terminal device sends a TCP synchronize (synchronize, SYN) packet to the service device. After obtaining the SYN packet, the service device sends a SYNACK packet to the terminal device, and the packet is forwarded by the access device. The packet also passes through the packet capture device, and the packet capture device obtains the packet and a receive time point of the packet. After receiving the SYNACK packet sent by the service device, the terminal device sends an ACK packet to the service device. The packet passes through the access device and the packet capture device, and the packet capture device obtains the packet and a receive time point of the packet.

Optionally, when the first packet and the second packet are a TCP SYNACK packet and/or a TCP ACK packet, the packet capture device receives the first packet from a physical interface that is of the packet capture device and that is far from the access device, for example, a wide area network (wide area network, WAN) interface. That is, the first packet is a packet sent from a service side to an access device side. The packet capture device receives the second packet from a physical interface that is of the packet capture device and that is close to the access device, for example, a local area network (local area network, LAN) interface. That is, the second packet is a packet sent from the access device side to the service side.

S309. The packet capture device sends the second packet and the receive time point of the second packet to the packet obtaining device.

S305 and S309 may both be performed after S307. Alternatively, the packet capture device may generate one or two packets based on the captured first packet and second packet and the receive time points of the first packet and the second packet, to replace the packets in S305 and S309.

In an example, the two packets generated by the packet capture device to replace the packets in S305 and S309 include packet characteristic information of the first packet and the second packet and receive time point information of the two packets. The packet characteristic information may be IP 5-tuple information determined by the packet capture device based on a same TCP connection, including a destination IP address, a source IP address, a destination port number, a source port number, and a transport layer protocol. That is, when IP 5-tuples of the two packets can correspond to each other, the two packets are considered as a packet pair.

The packet characteristic information may alternatively be a specific identifier generated by the packet capture device to indicate a packet of the same TCP connection. For example, the identifier may be a packet identifier obtained by the packet capture device by performing a hash algorithm based on an IP 5-tuple. The packet may further include an identifier of the access device, and the identifier of the access device may be an IP address of the access device, an identifier of an interface through which the access device connects to the packet capture device, a Media Access Control (MAC) address of the access device, an access device name allocated by the packet capture device to the access device, or any combination thereof. It should be understood that when only the access device is connected to the packet capture device, the identifier of the access device is not mandatorily carried.

S311. The packet obtaining device obtains one or more packet pairs.

The packet obtaining device may obtain a plurality of packets, and determine, by matching information of the plurality of packets, that two packets are a packet pair. For example, the packet obtaining device determines that the first packet and the second packet are a packet pair by determining that the two packets are a TCP SYNACK packet and an ACK packet that are connected to a same TCP.

Optionally, when the packet obtaining device obtains the one or more packet pairs, the packet obtaining device further obtains an identifier of an access device that the packet pairs pass through, including an IP address of the access device, a MAC address of the access device, an identifier of an interface through which the packet capture device connects to the access device, a name of the access device, or the like.

Optionally, when the packet obtaining device obtains the one or more packet pairs, the packet obtaining device further obtains a manner of connecting the access device that the packet pairs pass through and the packet capture device, for example, a wired connection or a wireless connection.

In an example, the packet obtaining device obtains packet pair information shown in FIG. 5 based on information of the plurality of obtained packet pairs. The packet obtaining device records an identifier of the packet capture device, the identifier of the access device, the manner of connecting the access device and the packet capture device, the time point at which the packet capture device receives the first packet, and the time point at which the packet capture device receives the second packet.

S313. The packet obtaining device obtains a time difference or time differences of the one or more packet pairs.

In an example, the packet obtaining device obtains a time difference of one packet pair.

In an example, that the packet obtaining device obtains information about the time difference of the packet pair is shown in FIG. 6. The packet obtaining device records the identifier of the packet capture device, the identifier of the access device, the manner of connecting the access device and the packet capture device, and the time difference of the packet pair.

The packet obtaining device and the packet capture device may be a same device, or may be different devices. When the packet capture device and the packet obtaining device are two devices, the packet capture device needs to perform the foregoing steps S305 and S309, and the foregoing steps S305 and S309 may be performed together or may be performed separately. For example, when the packet capture device needs to send 100 packets to the packet obtaining device, the packet capture device may send the 100 packets to the packet obtaining device at a time, or the packet capture device may send the 100 packets in a plurality of times, and send one or more packets to the packet obtaining device each time, until the packet capture device sends all of the 100 packets to the packet obtaining device. When the packet capture device and the packet obtaining device are a same device, steps S305 and S309 do not need to be performed.

S315. The packet obtaining device sends the time difference or the time differences of the one or more packet pairs to a type determining device.

Optionally, when the packet obtaining device sends the time difference or the time differences of the one or more packet pairs to the type determining device, the packet obtaining device further sends an identifier of the packet obtaining device to the type determining device.

In an example, the identifier of the packet obtaining device may be any one of the following identifiers: a home user number of the packet obtaining device, an IP address of the packet obtaining device, an ESN code of the packet obtaining device, a MAC address of the packet obtaining device, or the like. This is not specifically limited in this application.

Optionally, when the packet obtaining device sends the time difference or the time differences of the one or more packet pairs to the type determining device, the packet obtaining device further sends, to the type determining device, an identifier of an access device that the packet pair passes through, including an IP address of the access device, a MAC address of the access device, information about an interface through which the access device accesses the packet capture device, and the like. Correspondingly, when the packet capture device is connected to only one access device, an identifier of the access device is also not mandatory.

Optionally, when the packet obtaining device sends the time difference or the time differences of the one or more packet pairs to the type determining device, the packet obtaining device further sends, to the type determining device, a manner in which the access device that the packet pair passes through accesses the packet capture device, for example, a wired connection or a wireless connection.

It should be understood that the foregoing packet obtaining device and the type determining device may be a same device, or may be different devices. When the packet obtaining device and the type determining device are a same device, the device does not perform step S315.

S317. The type determining device obtains the time difference or the time differences of the one or more packet pairs.

A manner in which the type determining device obtains the time difference or the time differences of the one or more packet pairs may be: The packet obtaining device actively sends the one or more packet pairs to the type determining device within a time period; or the type determining device actively obtains the time difference or the time differences of the one or more packet pairs stored by the packet obtaining device.

Optionally, when the type determining device actively obtains the time difference or the time differences of the one or more packet pairs from the packet obtaining device, the type determining device may further obtain a time difference or time differences of one or more packet pairs related to a specified access device.

S319. The type determining device determines a type of the access device based on the time difference or the time differences of the one or more packet pairs.

In an example, the type determining device determines, based on an obtained time difference of a packet pair, the type of the access device that the packet pair passes through. For example, when a value of the time difference is 5 milliseconds, it is determined that the type of the access device is a switch.

When the type determining device obtains the time differences of the plurality of packet pairs, the type determining device may determine the type of the access device based on a result such as a mean value or a median of the time differences of the plurality of the packet pairs, or a mean value or a median obtained after a time difference with a relatively large deviation is removed.

Optionally, the type determining device determines the type of the access device based on a time difference threshold and the time difference or the time differences of the one or more packet pairs.

The time difference threshold may be a time difference threshold delivered by a network management system, a time difference threshold manually configured by O&M personnel, or a time difference threshold calculated by the type determining device. This is not specifically limited in this application. The time difference threshold may alternatively be predefined or pre-configured before the type determining device is delivered from a factory, instead of a time difference threshold that has to be obtained additionally.

In an example, the time difference threshold is 4 milliseconds, and the time difference threshold indicates that when a time difference of a packet pair passing through an access device is greater than or equal to 4 milliseconds, the access device is an AP. The time difference threshold may further indicate that when a time difference of a packet pair passing through an access device is less than or equal to 4 milliseconds, the access device is a switch. For example, when a time difference of a packet pair obtained by the type determining device is 10 milliseconds, the access device is an AP. For example, when a time difference of a packet pair obtained by the type determining device is 2 milliseconds, the access device is a switch or a personal computer.

Optionally, the type determining device compares the mean value of the time differences of the plurality of packet pairs with the time difference threshold, to determine the type of the access device.

In an example, when the type determining device obtains the time differences of the plurality of packet pairs, the type determining device may determine the type of the access device based on a result of comparing the time difference threshold with the mean value or the median of the time differences of the plurality of packet pairs or the mean value or the median obtained after the time difference with the relatively large deviation is removed. For example, when the result is greater than or equal to 4 milliseconds, the type determining device considers that the access device is an AP; or when the result is less than or equal to 4 milliseconds, the type determining device considers that the access device is a switch or a personal computer.

Optionally, the type determining device determines the type of the access device based on a proportion of a quantity of packet pairs that are greater than or less than the time difference threshold in the time differences of the plurality of packet pairs.

It should be understood that the foregoing "greater than or less than" may be "greater than and equal to, or less than and equal to", that is, a scenario of "equal to" is also taken into account.

The proportion may be a quantity of time differences greater than the time difference threshold divided by a total quantity of time differences, a quantity of time differences less than the time difference threshold divided by the total quantity of time differences, the quantity of time differences greater than the time difference threshold divided by the quantity of time differences less than the time difference threshold, or the like. This is not specifically limited in this application.

In an example, assuming that the total quantity of time differences of the plurality of packet pairs received by the type determining device is 20. If the quantity of time differences that are greater than or equal to the time difference threshold is 18, the proportion may be 90%, and the proportion is a high-probability proportion. In this case, the type determining device determines that the access device is an AP. If the quantity of time differences that are less than or equal to the time difference threshold is 4, the proportion may be 20%, and the proportion is a low-probability proportion. In this case, the type determining device determines that the access device is a switch or a personal computer. Alternatively, if the quantity of time differences that are greater than or equal to the time difference threshold is 15, and the quantity of time differences that are less than the time difference threshold is 5, the proportion may be 3, which is greater than 1. In this case, the type determining device determines that the access device is an AP.

The foregoing describes the method for determining an access device type in the embodiments of this application. The following describes a network device provided in the embodiments of this application.

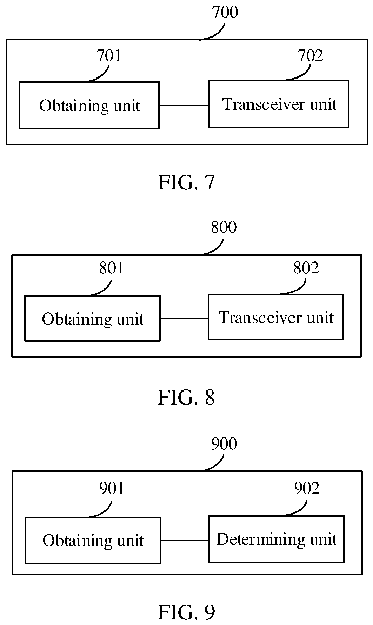

FIG. 7 shows a network device 700 provided in an embodiment of this application. The network device 700 may perform the method performed by the packet capture device shown in FIG. 3.

The network device 700 includes an obtaining unit 701 and a transceiver unit 702. The obtaining unit 701 may be configured to perform, for example, steps S301, S303, and S307 and related optional manners in the embodiment of FIG. 3, and the transceiver unit 702 may be configured to perform steps S305 and S309 and related optional manners in the embodiment of FIG. 3.

FIG. 8 shows a network device 800 provided in an embodiment of this application. The network device 800 may perform the method performed by the packet obtaining device shown in FIG. 3.

The network device 800 includes an obtaining unit 801 and a transceiver unit 802. The obtaining unit 801 may be configured to perform, for example, steps S311 and S313 and related optional manners in the embodiment of FIG. 3, and the transceiver unit 702 may be configured to perform step S315 and related optional manners in the embodiment of FIG. 3.

FIG. 9 shows a network device 900 provided in an embodiment of this application. The network device 900 may perform the method performed by the type determining device shown in FIG. 3.

The network device 900 includes an obtaining unit 901 and a determining unit 902. The obtaining unit 901 may be configured to perform, for example, step S317 and related optional manners in the embodiment of FIG. 3, and the determining unit 902 may be configured to perform step S319 and related optional manners in the embodiment of FIG. 3.

It should be understood that the methods corresponding to the network devices 700, 800, and 900 shown above may be performed by a plurality of network devices, or may be performed by one device. For example, a network device 101 may perform both methods performed by the network device 700 and the network device 800, a server may perform both methods performed by the network device 800 and the network device 900, and the network device 101 may perform all methods performed by the network device 700, the network device 800, and the network device 900. It should be noted that, when the network device 700 provided in the embodiment of FIG. 7, the network device 800 provided in the embodiment of FIG. 8, and the network device 900 provided in the embodiment of FIG. 9 determine an access device type, division into the foregoing function units is merely used as an example for description. During actual application, the foregoing functions may be allocated to different function units for implementation based on a requirement, that is, an internal structure of the network device is divided into different function units, to implement all or some of the functions described above. Alternatively, a same function unit is used to complete the functions of a plurality of units. It should be understood that, the network devices provided in the foregoing embodiments and the foregoing embodiments of the method for determining an access device type belong to a same concept. The steps performed by units of the network devices are merely used as examples for description, and this does not mean that the units of the network devices do not perform other steps or optional methods in the foregoing embodiments. For a specific implementation process, refer to the method embodiments, and details are not described herein again.

The foregoing describes the network devices in the embodiments of this application, and the following describes possible product forms of the network devices. It should be understood that any form of product that has features of the network device 700 in FIG. 7, the network device 800 in FIG. 8, and the network device 900 in FIG. 9 falls within the protection scope of this application. It should be further understood that the following descriptions are merely examples, and the product forms of the network devices in the embodiments of this application are not limited.

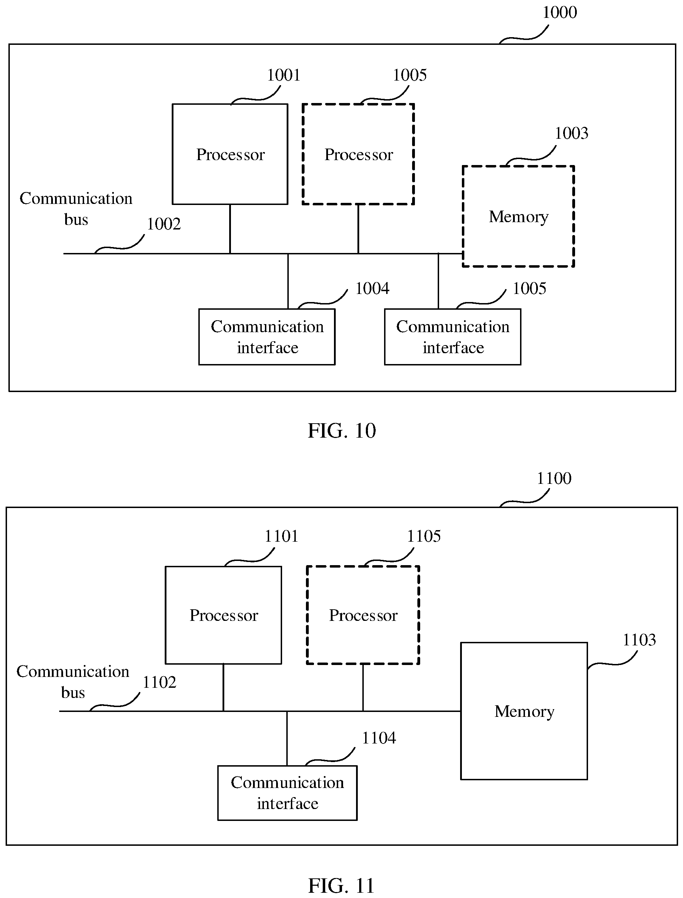

FIG. 10 is a schematic diagram of a structure of a device 1000 according to an embodiment of this application. The packet capture device, the packet obtaining device, and the type determining device shown in the embodiment of FIG. 3 may all be implemented by using the device shown in FIG. 10. Refer to the schematic diagram of the structure of the device shown in FIG. 10. The device 1000 includes at least one processor 1001, a communication bus 1002, a communication interface 1004, and a communication interface 1005. Optionally, the device 1000 may further include a memory 1003.

The processor 1001 may be a general-purpose central processing unit (central processing unit, CPU), an application-specific integrated circuit (application-specific integrated circuit, ASIC), or one or more integrated circuits configured to control program execution of the solutions in this application. The processor may be configured to implement the method for determining an access device type provided in the embodiments of this application.

For example, when the packet capture device in the embodiment of FIG. 3 is implemented by using the device 1000 shown in FIG. 10, the processor 1001 may be configured to: obtain a packet capture instruction, so that the communication interface 1004 obtains a first packet, and the communication interface 1005 obtains a second packet; and obtain a receive time point of the first packet and a receive time point of the second packet. When the packet obtaining device in the embodiment of FIG. 3 is also implemented by using the device 1000 shown in FIG. 10, the processor 1001 may be further configured to obtain a packet pair and a time difference of the packet pair. When the type determining device in the embodiment of FIG. 3 is also implemented by using the device 1000 shown in FIG. 10, the processor 1001 may be further configured to determine a type of an access device based on the time difference of the packet pair.

The communication bus 1002 is configured to transmit information between the processor 1001, the communication interface 1004, the communication interface 1005, and the memory 1003.

The memory 1003 may be a read-only memory (read-only memory, ROM), for example, an electrically erasable programmable read-only memory (electrically erasable programmable read-only memory, EEPROM), a compact disc read-only memory (compact disc read-only memory, CD-ROM), or another compact disc or optical disc storage (including a compressed optical disc, a laser disc, an optical disc, a digital versatile disc, a Blu-ray disc, or the like). Alternatively, the memory 1003 may be a random access memory (random access memory, RAM) or another type of dynamic storage device that can store information and instructions.

The memory 1003 may exist independently, and is connected to the processor 1001 by using the communication bus 1002. Alternatively, the memory 1003 may be integrated with the processor 1001.

Optionally, the memory 1003 is configured to store program code or instructions for executing the solutions of this application, and the processor 1001 controls the execution. The processor 1001 is configured to execute the program code stored in the memory 1003. The program code may include one or more software modules. Optionally, the processor 1001 may alternatively store program code or instructions for executing the solutions of this application.

The communication interface 1004 is any apparatus such as a transceiver, and is configured to communicate with another device or a communication network. The communication network may be the Ethernet, a radio access network (RAN), a wireless local area network (wireless local area network, WLAN), or the like. In this embodiment of this application, the communication interface 1004 may be configured to receive the first packet sent by another network device, or may send the first packet to an access network device or another network device. The communication interface 1004 may be an Ethernet (Ethernet) interface, a Fast Ethernet (Fast Ethernet, FE) interface, or a Gigabit Ethernet (Gigabit Ethernet, GE) interface.

The communication interface 1005 is any apparatus such as a transceiver, and is configured to communicate with another device or a communication network. The communication network may be the Ethernet, a radio access network (RAN), a wireless local area network (wireless local area network, WLAN), or the like. In this embodiment of this application, the communication interface 1005 may be configured to receive the second packet sent by the access device, or may send the second packet to another network device. The communication interface 1005 may be an Ethernet (Ethernet) interface, a Fast Ethernet (Fast Ethernet, FE) interface, or a Gigabit Ethernet (Gigabit Ethernet, GE) interface.

During specific implementation, in an embodiment, the device 1000 may include a plurality of processors, for example, the processor 1001 and a processor 1005 shown in FIG. 10. Each of the processors may be a single-core (single-CPU) processor or a multi-core (multi-CPU) processor. The processor herein may be one or more devices, circuits, and/or processing cores configured to process data (for example, computer program instructions).

FIG. 11 is a schematic diagram of a structure of a device 1100 according to an embodiment of this application. Both the packet obtaining device and the type determining device shown in the embodiment of FIG. 3 may be implemented by using the device shown in FIG. 11. Refer to the schematic diagram of the structure of the device shown in FIG. 11. The device 1100 includes at least one processor 1101, a communication bus 1102, and a communication interface 1104. Optionally, the device 1100 may further include a memory 1103.

The processor 1101 may be a general-purpose central processing unit (central processing unit, CPU), an application-specific integrated circuit (application-specific integrated circuit, ASIC), or one or more integrated circuits configured to control program execution of the solutions in this application. The processor may be configured to implement the method for determining an access device type provided in the embodiments of this application.

For example, when the packet obtaining device in the embodiment of FIG. 3 is implemented by using the device 1100 shown in FIG. 11, the processor 1101 may be configured to obtain a packet pair and a time difference of the packet pair. When the type determining device in the embodiment of FIG. 3 is also implemented by using the device 1100 shown in FIG. 11, the processor 1101 may be further configured to determine a type of an access device based on the time difference of the packet pair.

The communication bus 1102 is configured to transmit information between the processor 1101, the communication interface 1104, and the memory 1103.

The memory 1103 may be a read-only memory (read-only memory, ROM), for example, an electrically erasable programmable read-only memory (electrically erasable programmable read-only memory, EEPROM), a compact disc read-only memory (compact disc read-only memory, CD-ROM), or another compact disc or optical disc storage (including a compressed optical disc, a laser disc, an optical disc, a digital versatile disc, a Blu-ray disc, or the like). Alternatively, the memory 1003 may be a random access memory (random access memory, RAM) or another type of dynamic storage device that can store information and instructions.

The memory 1103 may exist independently, and is connected to the processor 1101 by using the communication bus 1102. Alternatively, the memory 1103 may be integrated with the processor 1101.

Optionally, the memory 1103 is configured to store program code or instructions for executing the solutions of this application, and the processor 1101 controls the execution. The processor 1101 is configured to execute the program code stored in the memory 1103. The program code may include one or more software modules. Optionally, the processor 1101 may alternatively store program code or instructions for executing the solutions of this application.

The communication interface 1104 is any apparatus such as a transceiver, and is configured to communicate with another device or a communication network. The communication network may be the Ethernet, a radio access network (RAN), a wireless local area network (wireless local area network, WLAN), or the like. In this embodiment of this application, the communication interface 1104 may be configured to receive a first packet sent by another network device, or may send the first packet to an access network device or another network device. The communication interface 1104 may be an Ethernet (Ethernet) interface, a Fast Ethernet (Fast Ethernet, FE) interface, or a Gigabit Ethernet (Gigabit Ethernet, GE) interface.

During specific implementation, in an embodiment, the device 1100 may include a plurality of processors, for example, the processor 1101 and a processor 1105 shown in FIG. 11. Each of the processors may be a single-core (single-CPU) processor or a multi-core (multi-CPU) processor. The processor herein may be one or more devices, circuits, and/or processing cores configured to process data (for example, computer program instructions).

It should be understood that the foregoing product forms of the network devices have any function of the network devices in the foregoing method embodiments for determining an access device type, and details are not described herein.

A person of ordinary skill in the art may be aware that, the method steps and units that are described with reference to the embodiments disclosed in this specification can be implemented by electronic hardware, computer software, or a combination thereof. To clearly describe interchangeability between the hardware and the software, the foregoing has generally described steps and compositions of each embodiment based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person of ordinary skill in the art that, for a purpose of convenient and brief descriptions, for a detailed working process of the foregoing system, apparatus and unit, refer to a corresponding process in the foregoing method embodiments. Details are not described herein again.

In the several embodiments provided in this application, it should be understood that the disclosed apparatus and method may be implemented in another manner. For example, the described apparatus embodiment is merely an example. For example, division into units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical form or another form.

Units described as separate components may or may not be physically separated, and components displayed as the units may or may not be physical units. That is, the units may be located at one location, or may be distributed to a plurality of network units. Some or all of the units may be selected based on an actual requirement to implement the objectives of the solutions in the embodiments of this application.

In addition, the processing units in the embodiments of this application may be dispersed in a plurality of function units, or may be integrated into one processing unit. Each of the units may exist alone physically, or two or more units may be integrated into one unit. The integrated unit may be implemented in a form of hardware, or may be implemented in a form of a software function unit.

All or some of the foregoing embodiments may be implemented by using software, hardware, firmware, or any combination thereof. When the software, the firmware or the combination of the software and the hardware is used to implement the embodiments, all or some of the embodiments may be implemented in a form of a computer program product. The computer program product includes one or more computer program instructions. When the computer program instructions are loaded and executed on a computer, the procedures or the functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer program instructions may be transmitted from a website, a computer, a server, or a data center to another website, computer, server, or data center in a wired or wireless manner. The computer-readable storage medium may be any medium accessible by a computer, or a data storage device, for example, a server or a data center, integrating one or more media. The medium may be a magnetic medium (for example, a floppy disk, a hard disk, or a magnetic tape), an optical medium (for example, an optical disc), a semiconductor medium (for example, a solid-state drive), or the like.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A method for determining an access device type, comprising:
obtaining one or more packet pairs, wherein each packet pair comprises a first packet and a second packet, the second packet is a response to the first packet, and the one or more packet pairs pass through a same access device; and
determining a type of the access device based on a time difference or time differences of the one or more packet pairs, wherein a time difference of any packet pair is a difference between receive time points of two packets in the packet pair.

2. The method according to claim 1, wherein
the first packet is a synchronize sequence number acknowledgement packet of a transmission control protocol TCP connection, and the second packet is an acknowledgement packet of the TCP connection.

3. The method according to claim 1 or 2, wherein the determining a type of the access device based on a time difference or time differences of the one or more packet pairs comprises:
determining the type of the access device based on a time difference threshold and the time difference or the time differences of the one or more packet pairs.

4. The method according to claim 3, wherein the determining the type of the access device based on a time difference threshold and the time difference or the time differences of the one or more packet pairs comprises:
comparing a mean value or a median of the time differences of the plurality of packet pairs with the time difference threshold, to determine the type of the access device.

5. The method according to claim 3, wherein the determining the type of the access device based on a time difference threshold and the time difference or the time differences of the one or more packet pairs comprises:
determining the type of the access device based on a proportion of a quantity of packet pairs that are greater than or less than the time difference threshold in the time differences of the plurality of packet pairs.

6. The method according to any one of claims 1 to 5, wherein the obtaining one or more packet pairs comprises:
obtaining the first packet received by a physical interface that is of a packet capture device and that is far from the access device; and
obtaining the second packet received by a physical interface that is of the packet capture device and that is close to the access device.

7. A network system, comprising:
a packet obtaining device, configured to obtain one or more packet pairs, wherein each packet pair comprises a first packet and a second packet, the second packet is a response to the first packet, and the one or more packet pairs pass through a same access device; and
a type determining device, configured to determine a type of the access device based on a time difference or time differences of the one or more packet pairs, wherein a time difference of any packet pair is a difference between receive time points of two packets in the packet pair.

8. The network system according to claim 7, wherein
the first packet is a synchronize sequence number acknowledgement packet of a transmission control protocol TCP connection, and the second packet is an acknowledgement packet of the TCP connection.

9. The network system according to claim 7 or 8, wherein that the type determining device determines the type of the access device based on the time difference or the time differences of the one or more packet pairs comprises:
the type determining device determines the type of the access device based on a time difference threshold and the time difference or the time differences of the one or more packet pairs.

10. The network system according to claim 9, wherein that the type determining device determines the type of the access device based on the time difference or the time differences of the one or more packet pairs comprises:
the type determining device compares a mean value or a median of the time differences of the plurality of packet pairs with the time difference threshold, to determine the type of the access device.

11. The network system according to claim 10, wherein that the type determining device determines the type of the access device based on the time difference or the time differences of the one or more packet pairs comprises:
the type determining device determines the type of the access device based on a proportion of a quantity of packet pairs that are greater than or less than the time difference threshold in the time differences of the plurality of packet pairs.

12. The network system according to any one of claims 7 to 11, wherein the network system comprises a packet capture device, and obtaining the one or more packet pairs comprises:
obtaining the first packet received by a physical interface that is of the packet capture device and that is far from the access device; and
obtaining the second packet received by a physical interface that is of the packet capture device and that is close to the access device.

13. A network device, comprising:
a processor and at least two communication interfaces, wherein
the processor is configured to enable the network device to: capture a first packet received by a first communication interface in the at least two communication interfaces, capture a second packet received by a second communication interface in the at least two communication interfaces, and obtain receive time points of receiving the first packet and the second packet, wherein the second packet is a response to the first packet, and the first packet and the second packet pass through a same access device.

14. The network device according to claim 13, wherein
the first packet is a synchronize sequence number acknowledgement packet of a transmission control protocol TCP connection, and the second packet is an acknowledgement packet of the TCP connection.

15. The network device according to claim 13 or 14, wherein
the first communication interface is a communication interface that is of the network device and that is far from the access device; and
the second communication interface is a communication interface that is of the network device and that is close to the access device.

16. The network device according to any one of claims 13 to 15, wherein the processor is further configured to:
determine that the first packet and the second packet are a packet pair; and
determine a time difference of the packet pair, wherein the time difference of the packet pair is a difference between the receive time point of a first packet pair and the receive time point of the second packet.

17. The network device according to claim 16, wherein the processor is further configured to:
determine a type of the access device based on the time difference of the packet pair.

18. The network device according to any one of claims 13 to 17, wherein
the processor is further configured to: obtain a first packet characteristic based on the first packet, and obtain a second packet characteristic based on the second packet; and
the first communication interface is further configured to forward the first packet or the first packet characteristic, and the second communication interface is further configured to forward the second packet or the second packet characteristic.

19. A network device, comprising:
a processor, a memory, and a communication interface, wherein
the communication interface is configured to receive a plurality of packets, and the plurality of packets pass through a same access device;
the memory stores instructions, and the processor is configured to execute the instructions to determine one or more packet pairs based on the plurality of packets, wherein any packet pair in the one or more packet pairs comprises a first packet and a second packet, and the second packet in the packet pair is a response to the first packet in the packet pair; and
the processor is further configured to obtain a time difference or time differences of the one or more packet pairs, wherein the time difference or the time differences of the one or more packet pairs is/are a difference between receive time points of two packets in any packet pair.

20. The network device according to claim 19, wherein that the processor is configured to determine the one or more packet pairs based on the plurality of packets is specifically:
when the first packet carries a first packet characteristic, and the second packet carries a second packet characteristic,
the processor determines, based on the first packet characteristic and the second packet characteristic, that the first packet and the second packet are a packet pair.

21. A network device, comprising:
a processor and a memory, wherein
the memory stores instructions; and
the processor is configured to execute the instructions in the memory to determine an access device type based on a time difference or time differences of one or more packet pairs, wherein the packet pair comprises a first packet and a second packet, the second packet is a response to the first packet, and the one or more packet pairs pass through a same access device.
